# EUROPEAN PATENT SPECIFICATION

(11) **EP 0 710 462 B1**
(45) Date of publication and mention of the grant of the patent: **08.04.1998**
(21) Application number: 94830529.7
(22) Date of filing: 04.11.1994
(51) Int. Cl.: A47J 31/00, A47J 31/06

(54) **A chamber for the brewing of a coffee beverage from a sachet of coffee**
Kammer für des Aufbrühen eines Kaffeegetränks ausgehend von einer Tüte mit Kaffee
Chambre d'infusion d'une boisson au café à partir d'un sachet de café

(43) Date of publication of application: 08.05.1996
(73) Proprietor: ILLYCAFFE' S.p.A., I-34147 Trieste (IT)
(72) Inventor: Illy, Ernesto, Trieste (IT); Marega, Giorgio, Trieste (IT)
(74) Representative: Ferraiolo, Ruggero

(56) References cited:
- EP-A- 0 249 700
- WO-A-94/02059
- BE-A- 620 881
- FR-A- 2 617 389
- US-A- 3 143 955
- US-A- 3 561 349
- US-A- 3 620 155

## Description

The present invention concerns a chamber for the brewing of a coffee beverage from a sachet of coffee.

The practice of extracting coffee beverage from a coffee sachet has long been known; the term -sachet-, although improperly used, has spread in the field to define a circular cartridge, generally 35 to 50 mm. diameter, and about 5 mm. thick, that contains a dose of ground coffee, more or less compacted, held between two sheets of water permeable paper; this sachet may be set on the filter of a brewing chamber (henceforth simply called - chamber -) of a coffee machine.

This practice is well accepted by the users thanks to the simple operations and, in some cases, owing to the good quality of the beverage produced.

When a user operates the coffee machine the upper side of the sachet is invested by a flow of water at convenient pressure and temperature, so a pressurized percolation takes place through the thickness of coffee bringing a beverage with good flavour, aroma, body, froth, and other desired features, into the cup.

Although the manufacturers of coffee machines employing sachets of coffee have so far tried to improve the brewing chambers in order to obtain a better effect, still now inconveniences due to various, yet unknown, characteristics of the sachet-chamber system and, above all, to the fact that a part of the water sent onto the sachet passes between the lateral wall of the chamber and the border of the sachet; this happens because the hydraulic resistance of this system is difficult to control owing to the variable geometry and firmness of the sachet and the geometry of the chambers currently available on the market; in fact the following two types of product can be found:
a) normally or considerably compacted sachets with a geometry made for a particular chamber;
b) slightly or non compacted sachets, hence, more or less soft and deformable sachets, with a geometry adaptable to a brewing chamber.

Obviously compact sachets and sachets slightly or not at all compacted, the geometry of which does not adapt to a given brewing chamber, are not considered.

In 1978, the applicant had deposited an Italian utility model, later incorporated in European patent n° 0006175, that discloses a brewing chamber according to the preamble of claim 1, in which the sachet is gripped adjacent to its peripheral border, but not all along the perimeter, so that some of the water sent to the chamber still passes between the chamber's lateral wall and the border of the sachet.

The present invention as described in claim 1 obviates at least the inconvenience mentioned above; it is a brewing chamber defined by an upper body fixed to the coffee machine, into which the pressurized hot water arrives, and a lower body that can be applied against the upper body that bears a filter onto which a sachet can be laid, the upper body features a greater volume in which the water enters and into which the sachet may expand and a pressure means that will penetrate the sachet close to its peripheral border that is characterized by the combination of the following features: the pressure means is an upper circular relief that penetrates the upper perimeter area of the sachet; the part of chamber comprised between said relief and the lower plane of the upper body and the part of chamber defined by the curved perimeter of the filter must feature the same perimeter profile as the sachet, that, in this way, is conveniently pressed.

The upper circular relief may have a section such that it penetrates the sachet with an imprint that has depth H of the same order of size as the width L; for instance with a circular relief having a semi-circular section, the depth H of the imprint is the same as the radius of the semi-circle and the width L of the imprint is the same as the diameter of the semi-circle.

Alternatively, said relief may be of an elongated shape that begins adjacently to the joint between the upper plane part and curved part of the border of the sachet and terminates adjacent to the lower plane of said upper body, so as to press the entire upper perimeter of the sachet.

Additionally, the part of chamber included between the upper circular relief and said plane comprises a circular recess that defines a volume into which part of the perimeter of the sachet may expand.

Again alternatively, said reliefs are made of rubber suited for foods, metal, or other suitable material, and are lodged in appropriate sites in the chamber.

The alternative of realizing said reliefs with an elastic medium of rubber or neoprene ensures that the soft action exerted on the sachet does not endanger the integrity of the latter.

The main advantages of the invention lie in the reduction of the amount of water that passes around the periphery of the sachet and in the improvement of the brewing of coffee beverage from a sachet that, especially when not compacted, adapts to the chamber expanding into said first and second volumes before and after having been wetted by the water.

The invention is described in detail below with reference to the following attached drawings where:
Fig. 1 is a first vertical cross section,
Fig. 2 is a second vertical cross section, and
Fig. 3 is a third vertical cross section.

Parts in common in the three figures bear the same reference code.

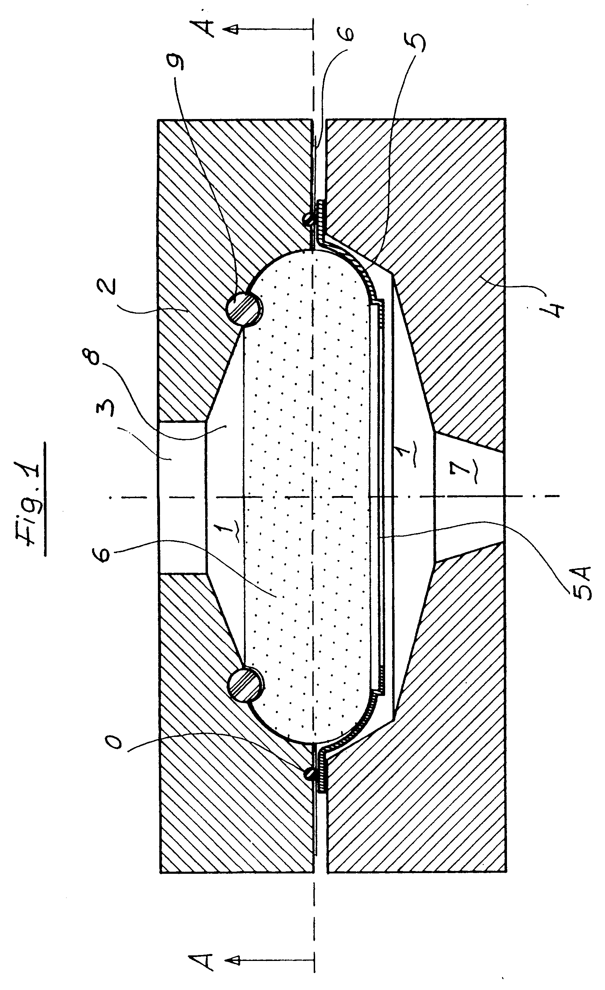

In Fig. 1 a brewing chamber is shown defined by:
- an upper body 2, fixed to a suitable coffee machine, not shown, and bearing a cylindrical aperture 3 into which hot water enters under pressure provided by a boiler or by a heat exchanger and a pump, not shown;
- a lower body 4, serrated to the upper body 2 in one of the convenient and well known manners; A-A shows a sealing plane between the upper and the lower bodies.

The lower body 4 bears a filter 5 on which a compacted sachet 6 is shown the lateral paper borders 6A of which are serrated between said two upper 2 and lower 4 bodies also by means of a rubber circular sealing gasket suited for foods O; for simple drawing the holes existing in the circular plane part 5A of the filter 5 have not been detailed; this part is simply shown with two parallel lines; a lower aperture 7 will release the coffee beverage into a cup below, not shown. The aperture 3 in the upper body 2 faces a first conical volume 8; along the lower perimeter of said first volume, appropriately held in place, there is a circular relief in the shape of an O-ring 9 of rubber suited for foods that penetrates the sachet 6 where the curved border of the latter begins; the part of the chamber 1 in the upper body 2 down-stream the O-ring 9, which part is curved, and the curved perimeter of the filter 5, which is considered as part of the chamber in the lower body, are in close contact with the perimeter of the sachet 6 so as to conveniently press it.

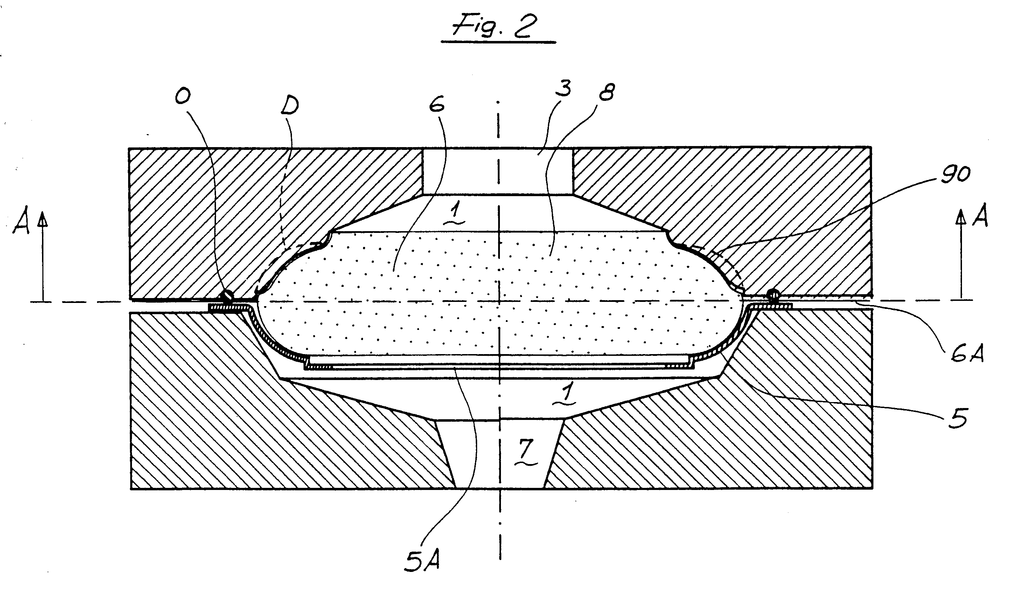

Fig. 2 shows a circular relief 90 having an elongated section that begins where the curved border of the sachet begins and terminates on said sealing plane A-A, so that the relief penetrates around the entire upper perimeter of the compact sachet 6; this part of the perimeter is limited by the broken line D.

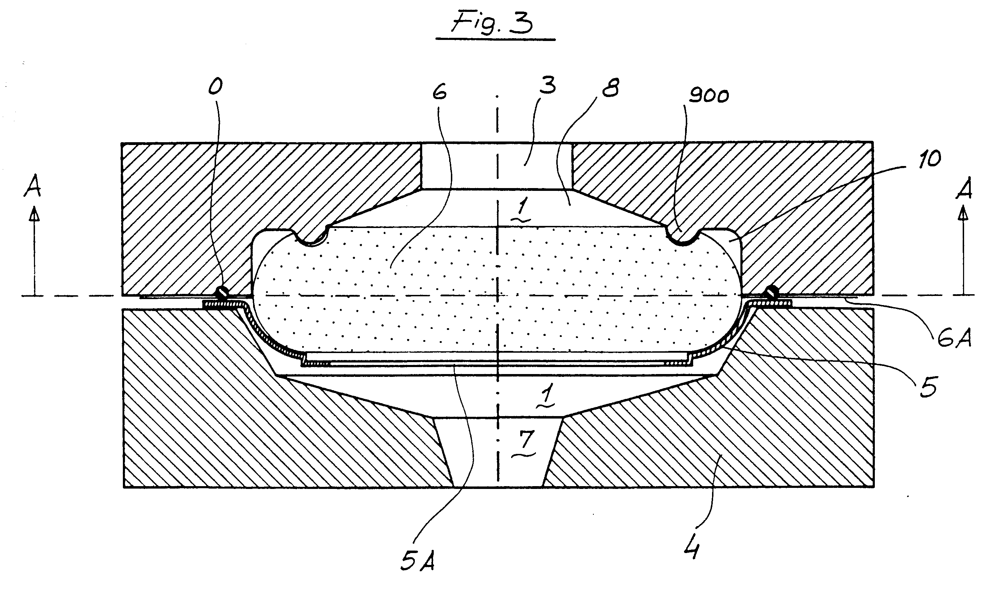

Fig. 3 shows that down-stream from the circular relief 900 the wall of chamber 1 comprises a circular recess that defines a second volume 10 into which a part of the perimeter of sachet 6 may expand when, wetted by water, it increases its volume; it is understood that the realization as shown in this figure is suited to the use of a non compacted sachet that may adapt into the chamber expanding into this volume even before being wetted.

## Claims

1. A chamber (1) for the brewing of a coffee beverage from a sachet (6) of coffee in the form of a circular cartridge containing a dose of ground coffee held between two water permeable sheets, the chamber being defined by an upper body (2) at the top of which hot water under pressure arrives and by a lower body (4) applicable against said upper body (2), a sealing plane (A-A) being defined between said bodies, which lower body (4) bears a filter (5) with a control plane part (5a) with holes and a surrounding curved part upon which the sachet (6) may be laid, which upper body (2) features an upper volume (8) in which the sachet (6) can expand and a pressure means (9) for pressing the sachet (6) close to the perimeter of the sachet (6) and that is characterized by the combination of the following features: the pressure means is a circular relief (9) in the upper body (2) that penetrates into the upper perimeter of the sachet (6); the part of the chamber (1) comprised between said circular relief (9) and the sealing plane (A-A) as well as the part of the chamber (1) defined by the curved part of the filter (5) sensibly feature the same profile as the perimeter of the sachet (6), so that both said parts of the chamber (1) come into close contact with the perimeter of the sachet (6) so as to conveniently press said perimeter.

2. A chamber (1) according to claim 1 characterized in that said circular relief (9) has a section such that it penetrates the sachet (6) with an imprint having depth (H) of the same order of size as the width (L).

3. A chamber (1) according to claim 1 characterized in that the circular relief is in the form of an elongated section (90) that faces and penetrates all around the upper curved perimeter of the sachet (6).

4. A chamber (1) according to claim 1 characterized in that the part of the chamber (1) comprised between said circular relief (900) and said sealing plane (A-A) comprises a circular recess that defines a volume (10) in which the perimeter of a sachet (6) may expand.

## Patentansprüche

1. Kammer zum Aufbrühen eines Kaffeegetränks von einem Kaffeebeutel (6) in Form einer kreisrunden Patrone, die eine Portion von gemahlenem Kaffee enthält, die zwischen zwei wasserdurchlässigen Lagen gehalten ist, wobei die Kammer begrenzt ist durch einen oberen Körper (2), an dessen Oberseite heißes Wasser unter Druck ankommt, und einen unteren Körper (4), der gegen den oberen Körper (2) ansetzbar ist, wobei eine Dichtungsebene (A-A) zwischen den beiden Körpern definiert ist, wobei der untere Körper (4) ein Filter (5) trägt mit einem ebenen Mittelteil (5a) mit Löchern und einem diesen umgebenden konvexen Teil, auf den der Beutel (6) aufgelegt werden kann, wobei der obere Körper (2) ein oberes Volumen (8), in dem sich der Beutel (6) ausdehnen kann, und eine Druckeinrichtung (5) zum Drücken des Beutels (6) nahe dem Umfang des Beutels (6) aufweist, **gekennzeichnet** durch die Kombination der folgenden Merkmale:
die Druckeinrichtung ist ein kreisrunder Vorsprung (9) in dem oberen Körper (2), der in den oberen Umfang des Beutels (6) vorspringt; der zwischen dem kreisrunden Vorsprung (9) und der Dichtungsebene (A-A) liegende Teil der Kammer (1) sowie der von dem gekrümmten Teil des Filters (5) begrenzte Teil der Kammer (1) haben im wesentlichen das gleiche Profil wie der Umfang des Beutels (6), so daß beide Teile der Kammer (1) in engen Kontakt mit dem Umfang des Beutels (6) kommen, um auf diesen Umfang einen geeigneten Druck auszuüben.

2. Kammer (1) nach Anspruch 1,
dadurch **gekennzeichnet,** daß der kreisrunde Vorsprung (9) einen solchen Querschnitt hat, daß er in den Beutel (6) mit einem Eindruck eindringt, dessen Tiefe (H) in der gleichen Größenordnung wie die Breite (L) ist.

3. Kammer (1) nach Anspruch 1,
dadurch **gekennzeichnet,** daß der kreisrunde Vorsprung die Form eines langgestreckten Querschnitts (90) hat, der dem gesamten oberen gekrümmten Umfang des Beutels (6) gegenüberliegt und in diesen eindringt.

4. Kammer (1) nach Anspruch 1,
dadurch **gekennzeichnet,** daß der zwischen dem kreisrunden Vorsprung (900) und der Dichtungsebene (A-A) liegende Teil der Kammer (1) eine kreisrunde Vertiefung aufweist, die ein Volumen (10) definiert, in das sich der Umfang des Beutels (6) ausdehnen kann.

## Revendications

1. Une chambre (1) pour infuser une boisson au café à partir d'un sachet (6) de café conformé comme une cartouche circulaire contenant une dose de café moulu maintenue entre deux enveloppes perméables à l'eau, la chambre étant définie par un élément supérieur (2), muni d'une entrée supérieure à travers laquelle de l'eau chaude sous pression arrive, et par un élément inférieur (4), pouvant être applique contre ledit élément supérieur (2), un plan d'obturation (A-A) étant défini entre lesdits éléments, l'élément inférieur (4) portant un filtre (5) muni d'une partie centrale (5a) comportant des ouvertures et une partie incurvée l'entourant, sur laquelle peut reposer le sachet (6), l'élément supérieur (2) définit un volume supérieur (8) dans lequel le sachet (6) peut se dilater et des moyens de pression (9) pour presser le sachet (6) à proximité du périmètre du sachet (6) et qui est caractérisée par la combinaison des caractéristiques suivantes : les moyens de pression sont constitués d'un joint circulaire (9) logé dans l'élément supérieur (2) et qui pénètre dans le périmètre supérieur du sachet (6); la partie de la chambre comprise entre ledit joint circulaire (9) et le plan d'obturation (A-A), ainsi que la partie de la chambre (1) définie par la partie incurvée du filtre (5), étant conformée de manière à présenter sensiblement le même profil que le périmètre du sachet (6), de telle façon que les deux éléments de la chambre (1) viennent en contact étroit avec le périmètre du sachet (6) afin d'exercer une pression adéquate sur ledit périmètre.

2. Une chambre (1) selon la revendication 1, caractérisée par le fait que le joint circulaire (9) présente une section telle qu'il pénètre le sachet (6) en laissant une empreinte ayant une profondeur (H) du même ordre de grandeur que la largeur (L).

3. Une chambre (1) selon la revendication 1, caractérisée par le fait que le joint circulaire (9) présente une section allongée (90) qui fait face et pénètre tout autour de la partie supérieure incurvée du sachet (6).

4. Une chambre (1) selon la revendication 1, caractérisée par le fait que la partie de la chambre (1) comprise entre ledit joint circulaire (900) et le plan d'obturation (A-A) comprend un évidement circulaire qui définit un volume (10) dans lequel le périmètre du sachet (6) peut se dilater.
